# EUROPEAN PATENT SPECIFICATION

(11) **EP 1 174 253 B1**
(45) Date of publication and mention of the grant of the patent: **31.03.2004**
(21) Application number: 01116609.7
(22) Date of filing: 11.07.2001
(51) Int. Cl.: B29D 30/24

(54) **Unistage drum for producing a farm vehicle radial tire**
Einstufige Reifenaufbautrommel zur Herstellung eines radialen Landwirtschaftsreifens
Tambour à un seul étage pour la confection d'un pneu radial pour véhicules agricoles

(30) Priority: 13.07.2000 IT TO000700
(43) Date of publication of application: 23.01.2002
(73) Proprietor: BRIDGESTONE CORPORATION, Tokyo 104-0031 (JP)
(72) Inventor: Farinola, Luca, 00121 Ostia Lido (IT)
(74) Representative: Jorio, Paolo

(56) References cited:
- EP-A- 0 505 813
- EP-A- 1 075 930
- US-A- 3 833 444
- US-A- 4 229 246
- US-A- 4 243 451
- US-A- 5 268 057

## Description

The present invention relates to a unistage drum for producing a farm vehicle radial tire.

In particular, the present invention relates to a unistage drum for producing a farm vehicle radial tire comprising a carcass having a relatively thin central portion and two thicker lateral portions; the drum comprising a fixed central body for supporting the central portion of the carcass and having a given outside diameter, and two half-drums, each for supporting a respective lateral portion of the carcass; and wherein the half-drums are located on opposite sides of the central body and are movable axially to and from the central body; and each half-drum comprises an expandable bead clamping device adjacent to the central body.

Agricultural radial tires are normally produced using a two-stage method whereby the tire is formed on a first- and a second-stage drum in succession. The first-stage drum is normally a cylindrical, radially collapsible drum having, when extended, an outside diameter greater than the inside diameter of the metal bead bundles of the tire being produced.

In the two-stage method, there are placed on the first-stage drum : an innerliner; two abrasion strips extending on opposite sides of the innerliner and so positioned as to each project partly from a respective annular end surface of the first-stage drum; and a number of body plies, each of which is normally reinforced with textile cords, is centered with respect to the innerliner, covers both the innerliner and the abrasion strips, and projects from the two annular end surfaces.of the first-stage drum. At this point, the portions of the abrasion strips and body plies projecting from the two end surfaces of the first-stage drum are gathered for insertion inside two bead bundles which are slid into contact with the respective end surfaces of the first-stage drum. At which point, the portions of the body plies and abrasion strips projecting outwards of the two bead bundles are turned up about the bead bundles and onto the outside of the first-stage drum by means of external turn-up devices, and the carcass is completed by laying on the outside of each turned-up portion a sidewall strip which is connected to an outer free edge of the respective abrasion strip.

The finished carcass has a substantially C-shaped section, and is removed from the first-stage drum by collapsing the first-stage drum to a diameter smaller than the inside diameter of the carcass (i.e. the inside diameter of the bead bundles less twice the thickness of the turned-up portions). The carcass is then mounted onto a second-stage drum comprising two rings, which are movable towards each other, support respective beads of the carcass, and have an outside diameter approximately equal to but no larger than the inside diameter of the carcass beads.

On the second-stage drum, the carcass is shaped by moving the two rings towards each other and, at the same time, pumping compressed air into the carcass to expand the carcass centrally into contact with a strip coaxial with the second-stage drum and comprising an inner portion defined by a pack of tread plies, and an outer portion defined by a tread strip.

Though more complicated than a unistage method - whereby the tire is assembled and shaped on a single building drum - the two-stage method is normally preferred when producing agricultural tires, on account of the high degree of expansion the carcasses of such tires undergo during shaping. The two-stage method, in fact, enables the carcass to be formed on a first-stage drum having an outside diameter greater than the inside diameter of the bead bundles, whereas the unistage method automatically calls for a building drum having an outside diameter necessarily smaller than the inside diameter of the bead bundles less the thickness of the layers inserted inside the bead bundles. In other words, using the two-stage method, not only is the carcass expanded from a greater original diameter with respect to the unistage method, but the length and, hence, the number of cords of the body ply used are greater than those of the body ply used in the unistage method.

This is confirmed in TABLE I below, which compares various characteristics of the same tire formed using the unistage and two-stage methods.

**TABLE I**

| | First stage drum diameter | Unistage drum diameter | Unistage drum variation |
|---|---|---|---|
| Drum diameter | 101.60 cm | 86.36 cm | 86.36 cm |
| Type of ply | DNO27 | DNO27 | DHO44 |
| Cord diameter | 0.66 mm. | 0.66 mm. | 0.66 mm. |
| Cord density | 10.2 per cm | 10.2 per cm | 11 per cm |
| Numero corde totale | 3267 | 2778 | 2991 |
| Loss | | 15% | 8.5% |

TABLE I applies to an agricultural tire with 38.5 in. (97.8 cm) inside diameter bead bundles. Since the flat carcass formed on a unistage drum comprises a relatively thin central portion and two much thicker lateral portions on account of the sidewalls - which, in agricultural tires are relatively thick (in the tire considered, the difference in thickness between each lateral portion and the central portion of the carcass is normally about 2-3 cm) - the above tire calls for a 34 in. (86.36 cm) outside diameter unistage drum to prevent interference, when assembling the bead bundles, with the layers of material laid on the drum and defining the relative lateral portions of the carcass.

As shown in TABLE I, using a DNO27 type body ply with 0.026 in. (0.66 mm) diameter textile cords and a density of 26 cords per inch (about 10.2 per cm), the total number of cords in the tire is reduced by 15% from 3267 to 2777 using a 34 in. (86.36 cm) outside diameter unistage drum, as opposed to a 40 in. (101.60 cm) outside diameter first-stage drum.

In short, TABLE I shows that, for a given type of material, the cord density at the shoulders of the tire formed on the unistage drum is low enough for the innerliner to possibly penetrate between the body ply cords, thus resulting in cutting of the innerliner, fractures spreading between the body ply cords, and impaired shock resistance of the tire.

Finally, TABLE I also shows that, replacing the DNO27 body ply with one of the same cord diameter and maximum possible cord density, i.e. a DNO27 ply with 28 cords per inch (about 11 per cm), the unistage drum described above produces a tire with a total number of 2991 cords and a loss of 8.5% with respect to the corresponding first-stage drum tire. Though undoubtedly less than before, such a loss is still sufficient to cause the same problems.

It is an object of the present invention to provide a unistage drum for producing agricultural tires, and which provides for maintaining the above loss within acceptable values.

According to the present invention, there is provided a unistage drum for producing a farm vehicle radial tire as claimed in Claim 1. A preferred embodiment of the invention is claimed in claim 2.

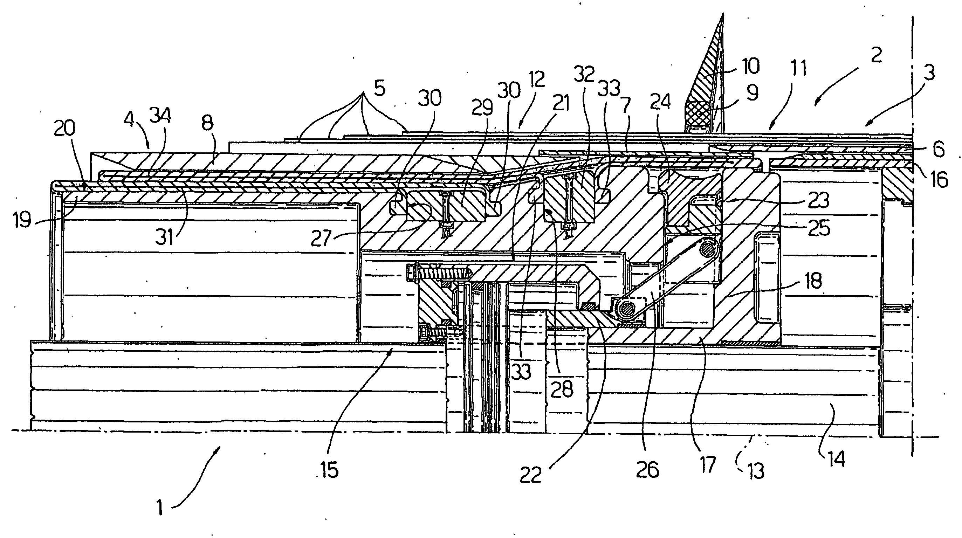

The invention will be described with reference to the accompanying drawing, which shows, by way of example, an axial section of a portion of a preferred embodiment of the drum according to the invention.

Number 1 in the accompanying drawing indicates as a whole a unistage drum for producing an agricultural tire 2 comprising a carcass 3, which, in the drawing, is shown laid flat on drum 1, and comprises a coating skim 4 on the outer surface of drum 1, and a number of plies 5 packed one on top of the other and laid on the outer surface of coating skim 4.

Coating skim 4 comprises a central innerliner 6; two abrasion strips 7 (only one shown) located on opposite sides of and overlapping innerliner 6; and two sidewalls 8 (only one shown), each of which overlaps respective abrasion strip 7 and is thicker than innerliner 6 and abrasion strips 7.

Carcass 3 also comprises two metal bead bundles 9 (only one shown), each of which is fitted onto plies 5 at relative abrasion strip 7, and has a relative substantially triangular bead filler 10 extending radially outwards from relative bead bundle 9. On the flat carcass 3, bead bundles 9 define a central portion 11 extending between the two bead bundles 9 and shown only partly; and two lateral portions 12 (only one shown) located on opposite sides of central portion 11, and which are turned up about respective bead bundles 9 when shaping carcass 3.

Drum 1 is mounted for rotation about a respective axis 13, and comprises a central tubular shaft 14 coaxial with axis 13 and housing a known actuating device (not shown) for moving two cylindrical half-drums 15 (only one shown) in opposite directions along shaft 14. Half-drums 15 are mounted to slide along shaft 14 coaxially with each other and with axis 13, and are connected to said actuating device (not shown) to slide in opposite directions along shaft 14 without rotating with respect to shaft 14.

Drum 1 also comprises a substantially cylindrical, fixed central body 16, which is fitted in an axially fixed position to shaft 14, is coaxial with half-drums 15, and connects half-drums 15 to each other.

Each half-drum 15 comprises a tubular central slide 17 fitted in sliding and angularly fixed manner to shaft 14 and having, at the end facing central body 16, an outer flange 18, the outer periphery of which is connected integrally to one end of a tubular body 19. Tubular body 19 is coaxial with axis 13 and has an outer surface 20 smaller in diameter than the outer surface of central body 16 by an amount specified later on.

At the opposite end to that supporting flange 18, slide 17 supports an annular hydraulic cylinder 21, which extends about shaft 14, coaxially with axis 13, and has a tubular output rod 22 facing flange 18, coaxial with axis 13, and sliding along slide 17 to and from flange 18.

Cylinder 21 defines. the actuating device of a respective bead clamping device 23 comprising a number of sectors 24, each of which is mounted to slide along a respective radial passage 25 formed through flange 18, is connected at the bottom, by means of a respective connecting rod 26, to the end of tubular rod 22 facing flange 18, and is moved by hydraulic cylinder 21 between a withdrawn rest position, in which sector 24 is housed inside relative passage 25, and a partly extracted work position clamping relative bead bundle 9.

Two annular grooves 27 and 28 are formed in surface 20 of tubular body 19, with groove 28 interposed between groove 27 and bead clamping device 23. Inside groove 27, both the annular end shoes 30 of an annular thrust bladder 31 are locked removably and adjacent to each other by means of an annular insert 29; bladder 31 at rest lies on surface 20 in the opposite direction to central body 16; and insert 29 is locked removably inside groove 27 between the two shoes 30. Inside groove 28, both the annular end shoes 33 of an annular turn-up bladder 34 are locked removably and adjacent to each other by means of an annular insert 32, and bladder 34 in the deflated rest condition lies on thrust bladder 31.

As can be seen from the accompanying drawing, substantially the whole portion of half-drum 15 extending outwards of relative bead clamping device 23 and defined by tubular body 19 and by the two bladders 31 and 34 lying at rest on tubular body 19 has a diameter D2 smaller than the outside diameter D1 of central body 16, and which differs from diameter D1 by an amount at least sufficient to compensate for the differences in thickness between central portion 11 and lateral portions 12 of carcass 3, i.e. at least sufficient to impart a substantially cylindrical shape to plies 5 of the flat carcass 3.

Unlike a known unistage drum, in which the portion of each half-drum extending outwards of the relative bead clamping device has substantially the same outside diameter as the relative central body, on drum 1, lateral portions 12 of the flat carcass 3 no longer project radially outwards with respect to central portion 11. Consequently, a tire such as the one described in the introduction, i.e. having 38.5 in. (97.8 cm) inside diameter bead bundles 9, may be formed on a unistage drum 1, the diameter D1 of the central body 16 of which may be increased to 36 in. (91.44 cm), i.e. by about 5 cm, with respect to the 34 in. (86.36 cm) of a known unistage drum, with no risk of interference between bead bundles 9 and relative lateral portions 12 of the flat carcass 3 when fitting bead bundles 9 to drum 1 outwards of relative bead clamping devices 23, or between the beads of tire 2 and central body 16 when unloading the finished tire 2 off drum 1.

The advantages of using a central body 16 with a larger diameter D1 are shown clearly in TABLE II below; which is a completion of TABLE I :

**TABLE II**

| | Two-stage drum diam. | Unistage drum diam. | Unistage Variation I | Unistage Variation II | Unistage Variation III |
|---|---|---|---|---|---|
| Drum diam. | 101.60 cm | 86.36 cm | 86.36 cm | 91.44 cm | 91.44 cm |
| Center diam. | | 86.36 cm | 86.36 cm | 91.44 cm | 91.44 cm |
| Side diam. | | 86.36 cm | 86.36 cm | 86.36 cm | 86.36 cm |
| Type of ply | DNO27 | DNO27 | DHO44 | DNO27 | DHO44 |
| Cord diam. | 0.66 mm. | 0.66 mm. | 0.66 mm. | 0.66 mm. | 0.66 mm. |
| Cord density | 10.2 per cm | 10.2 per cm | 11 per cm | 10.2 per cm | 11 per cm |
| No. Of cords | 3267 | 2778 | 2991 | 2940 | 3167 |
| Loss | | 15% | 8.5% | 10% | 3% |

As shown in TABLE II, if the Variation II data - relative to an agricultural tire with 38.5 in. (97.8 cm) inside diameter bead bundles, produced on a drum 1 with a central body 16 of 36 in. (91.44 cm) outside diameter D1, and using a DNO27 body ply with 0.026 in. (about 0.66 mm) diameter textile cords and a density of 26 cords per inch (about 10.2 per cm) - is compared with the data relative to the same tire having a carcass formed on a 40 in. (101.60 cm) outside diameter first-stage drum, the total number of cords in the drum 1 tire falls by 10% from 3267 to 2940, with the obvious risk of innerliner 6 penetrating between the cords of body plies 5 at least at the shoulders of tire 2.

Variation III in TABLE II, however, shows that, if, as in Variation I, the DNO27 body ply is replaced with a DNO27 body ply with 28 cords per inch (about 11 per cm), drum 1 described above - i.e. with a diameter D1 increased to 36 in. (91.44 cm) - provides for obtaining a tire with a total number of 3167 cords and a perfectly acceptable cord loss of 3% with respect to the corresponding tire formed on a 40 in. (101.60 cm) diameter first-stage drum.

In other words, TABLE II shows that the diameter D1 of central body 16 of a normal unistage drum - i.e. of substantially constant diameter - need simply be increased to compensate for the differences in thickness between the central portion 11 and lateral portions 12 of carcass 3 to enable the drum, with all the advantages afforded by the unistage method, to produce a carcass 3 with substantially the same structural characteristics as a corresponding carcass produced using the two-stage method on a first-stage drum.

## Claims

1. A unistage drum for producing a farm vehicle radial tire (2); the tire (2) comprising a carcass (3) having a relatively thin central portion (11) and two thicker lateral portions (12); the drum (1) comprising a fixed central body (16) for supporting the central portion (11) of said carcass (3) and having a first outside diameter (D1), and two half-drums (15), each for supporting a respective said lateral portion (12) of said carcass (3); and wherein said half-drums (15) are located on opposite sides of said central body (16) and are movable axially to and from the central body (16); and each said half-drum (15) comprises an expandable bead clamping device (23) adjacent to said central body (16); a tubular body (19) located partly outwards of the relative said bead clamping device (23) and having a cylindrical outer surface (20); a first annular thrust bladder (31) coaxial with said tubular body (19) and lying, at rest, on and in contact with said outer surface (20); and a second annular turn-up bladder (34) coaxial with said tubular body (19) and lying, at rest, outwards of and in contact with said first bladder (31); wherein at least one portion of each said half-drum (15) extending outwards with respect to the relative said bead clamping device (23) has a second diameter (D2) smaller than said first diameter (D1) to at least compensate for the differences in thickness between said central portion (11) and said lateral portions (12) of said carcass (3) when the carcass (3) is laid flat on the drum (1); said second diameter (D2) being equal to a diameter of said tubular body (19) plus twice a total thickness of said bladders (31, 34) at rest.

2. A drum as claimed in Claim 1, wherein said first diameter (D1) differs from said second diameter (D2) by about 5 cm.

## Patentansprüche

1. Einstufige Trommel zum Herstellen eines radialen Reifens (2) eines landwirtschaftlichen Fahrzeugs; wobei der Reifen (2) eine Karkasse mit einem relativ dünnen Mittelabschnitt (11) und zwei dickere Seitenabschnitte (12) umfasst; wobei die Trommel (1) einen befestigten Mittelkörper (16) zum Halten des Mittelabschnitts (11) der Karkasse (3), welcher einen ersten Außendurchmesser (D1) aufweist, und zwei Halbtrommeln (15) umfasst, jede zum Halten eines entsprechenden. Seitenabschnitts (12) der Karkasse (3); und wobei die Halbtrommeln (15) auf gegenüberliegenden Seiten des Mittelkörpers (16) lokalisiert und axial zu und weg von dem Mittelkörper (16) bewegbar sind; und wobei jede Halbtrommel (15) eine ausdehnbare Wulstklemmvorrichtung (23) benachbart zu dem Mittelkörper (16) umfasst; wobei ein röhrenförmiger Körper (19) teilweise außerhalb der jeweiligen Wulstklemmvorrichtung (23) lokalisiert ist und eine zylindrische Außenoberfläche (20) aufweist; wobei sich ein erster kreisförmiger Schubheizbalg (31) koaxial zu dem röhrenförmigen Körper (19) befindet und, in Ruhelage, auf und in Kontakt mit der Außenoberfläche (20) liegt; und wobei sich ein zweiter kreisförmiger Aufbiege-Heizbalg (34) koaxial zu dem röhrenförmigen Körper (19) befindet und, in Ruhelage, außen auf und in Kontakt mit dem ersten Heizbalg (31) liegt; wobei mindestens ein Abschnitt jeder Halbtrommel (15), welcher sich bezüglich der jeweiligen Wulstklemmvorrichtung (23) nach außen erstreckt, einen zweiten Durchmesser (D2) besitzt, welcher kleiner als der erste Durchmesser (D1) ist, um zumindest die Unterschiede in einer Dicke zwischen dem Mittelabschnitt (11) und den Seitenabschnitten (12) der Karkasse (3) auszugleichen, wenn die Karkasse (3) flach auf der Trommel (1) liegt; wobei der zweite Durchmesser (D2) gleich einem Durchmesser des röhrenförmigen Körpers (19) plus zweimal eine Gesamtdicke der Heizbälge (31, 34) in Ruhestellung ist.

2. Trommel nach Anspruch 1, wobei der erste Durchmesser (D1) sich von dem zweiten Durchmesser (D2) um ungefähr 5cm unterscheidet.

## Revendications

1. Tambour à un seul étage pour la fabrication d'un pneu radial pour véhicules agricoles (2) ; le pneu (2) comprenant une carcasse (3) possédant une partie centrale relativement fine (11) et deux parties latérales plus épaisses (12) ; le tambour (1) comprenant un corps central fixe (16) pour supporter la partie centrale (11) de ladite carcasse (3) et possédant un premier diamètre extérieur (D1), et deux demi-tambours (15), chacun destiné à supporter l'une desdites parties latérales respectives (12) de ladite carcasse (3) ; et dans lequel lesdits demi-tambours (15) sont situés sur les côtés opposés dudit corps central (16) et sont déplaçables axialement en direction de et à partir dudit corps central (16) ; et dans lequel chaque demi-tambour (15) comprend un dispositif de serrage à manchon extensible (23) adjacent audit corps central (16) ; un corps tubulaire (19) situé partiellement à l'extérieur dudit dispositif de serrage à manchon relatif (23) et possédant une surface extérieure cylindrique (20) ; un premier diaphragme à butée annulaire (31) coaxial avec ledit corps tubulaire (19) et se plaçant, au repos, sur et en contact avec ladite surface extérieure (20) ; et un deuxième diaphragme relevé à butée annulaire (34) coaxial avec ledit corps tubulaire (19) et se plaçant, au repos, à l'extérieur de et en contact avec ledit premier diaphragme (31) ; dans lequel au moins une partie de chacun desdits demi-tambours (15) s'étendant vers l'extérieur par rapport audit dispositif de serrage à manchon relatif (23) possède un deuxième diamètre (D2) inférieur audit premier diamètre (D1) afin de compenser au moins les différences d'épaisseur entre ladite partie centrale (11) et lesdites parties latérales (12) de ladite carcasse (3) lorsque la carcasse (3) est à plat sur le tambour (1) ; ledit deuxième diamètre (D2) étant égal à un diamètre dudit corps tubulaire (19) plus deux fois une épaisseur totale desdits diaphragmes (31, 34), au repos.

2. Tambour selon la revendication 1, dans lequel ledit premier diamètre (D1) diffère dudit deuxième diamètre (D2) d'environ 5 cm.
